# EUROPEAN PATENT SPECIFICATION

(11) **EP 1 599 087 B1**
(45) Date of publication and mention of the grant of the patent: **23.07.2008**
(21) Application number: 04711082.0
(22) Date of filing: 13.02.2004
(51) Int. Cl.: A01G 9/24

(54) **THE PRESENT INVENTION RELATES TO AN IRRIGATION SYSTEM, METHOD OF IRRIGATING AND METHOD OF MANUFACTURING AN IRRIGATION SYSTEM**
BEWÄSSERN UND VERFAHREN ZUR HERSTELLUNG EINES BEWÄSSERUNGSSYSTEMS
SYSTEME ET PROCEDE D'IRRIGATION ET PROCEDE DE FABRICATION D'UN SYSTEME D'IRRIGATION

(30) Priority: 14.02.2003 SE 0300426
(43) Date of publication of application: 30.11.2005
(73) Proprietor: BJÖRKEBO GARD AB, S-260 34 Mörarp (SE)
(72) Inventor: NILSSON, Bo-Arne, 260 34 Mörarp (SE)
(74) Representative: Andersson, Mikael Per Robert
(86) International application number: PCT/SE2004/000183
(87) International publication number: WO 2004/071173

(56) References cited:
- EP-A1- 0 599 040
- WO-A1-90/07871
- DE-C- 525 351
- GB-A- 2 101 863
- US-A- 4 185 414
- US-B1- 6 502 350

## Description

### Field of the Invention

The present invention relates to an irrigation system for plants, a method of manufacturing such a system and also a method of irrigating plants.

### Background Art

Irrigation systems according to the ebb and flow principle are common in the plant breeding business, and several systems are available. The ebb and flow principle is based on the water level on cultivation tables, cultivation channels or plant troughs in irrigation being raised and maintained for a certain time and then being lowered so that the plants are drained.

In prior-art technique using cultivation channels or plant troughs, water is supplied at one end and, by the trough sloping, it is drained at the other end. This technique allows trough lengths of about 10 to 12 m.

Cultivation tables comprising a plurality of elongate channel-shaped plant troughs are often used in connection with, for instance, cultivation of pot plants and result in better aeration of the foliages of the plants compared with cultivation tables which consist of only one wide trough.

The distance between the two ends results in variations of the time during which the individual plants are exposed to water and also variations of the flow. As a result of these variations, all plants in a trough will not get the same amount of water, which means that uneven growth arises and the quality of the plants is impaired.

To be able to irrigate a plurality of plants in a uniform manner in cultivation, a fibre cloth is often used on the bottom of the cultivation table to ensure that all plants will have uniform irrigation. The problem with the fibre cloth is that it makes water stay on the cultivation table, which results in development of algae and in the fibre cloth keeping moisture which is successively released to the atmosphere with increased moisture contents and the ensuing risk of formation of mould.

US 5,355,618 discloses a valve for irrigation of plants on cultivation tables. The valve is intended for use on cultivation tables where one single valve is arranged on each cultivation table. The cultivation tables described have a large surface, which means that the flow speed and the time during which the plants are exposed to water are different in different parts of the surface. The valve, which is arranged for inlet, outlet as well as oxygenation of water, has an inlet pipe which is fixedly connected to a stationary pressurised water system and an outlet pipe which is also fixedly connected to a stationary water drainage system.

NL 9102059 discloses an irrigation system according to the ebb and flow principle which consists of a basin, a central duct in the basin for supplying water and a horizontal cultivation surface above the basin. Openings are uniformly distributed over the cultivation surface. When supplying water, the basin is filled and the water level rises through the openings, thereby supplying water to the plants. Large amounts of water must be conveyed on each occasion of irrigation and there is a risk of algae and mould developing in the moist environment, rich in nutritious matter, that arises.

In the two above-described constructions, stationary connections to supply and discharge systems are required, which prevents the use of movable tables.

US 4 185 414 relates to a nutrient feed regulation systems for automatic control of nutrient flow rates in controlled agriculture installations. Feed regulators supply nutrient to gullies and plants are placed in the gullies.

WO 90/07871 discloses a valve system for supply and drainage of irrigation water in a greenhouse bench. Small drainage holes are placed in the trough. A plug is provided in the connection to the trough said plug being actuated by the weight and to thereby draining the trough.

EP599040 discloses a mobile table with a square frame for supporting planting channels. Water is provided from above by means of spouts.

### Summary

An object of the present invention is to supply and discharge water in a quick, effective and uniform manner to and from elongate plant troughs in irrigation of plants thereon.

According to the invention, this object is achieved by a system for irrigation according to claim 1, a method of irrigating according to claim 8, and a method of manufacturing a system for irrigation according to claim 11. Preferred embodiments will be evident from the dependent claims.

The invention is based on the fundamental idea of using a main pipe with a greater cross-sectional area, which by means of a number of branch pipes with a smaller cross-sectional area is connected to a plurality of openings arranged in the longitudinal direction in the bottom of a plant trough, for supplying and discharging water and also regulating the water level in the plant trough. Using a main pipe, through which the pressure drop over a long distance will be small, for feeding water in the longitudinal direction of a plant trough, it is ensured that water can be supplied and discharged at the same speed to different positions in the plant trough, also in very long plant troughs.

By means of a number of openings distributed in the longitudinal direction in the bottom of the plant trough, which by branch pipes with a smaller cross-sectional area are connected to the main pipe, it is possible to supply and discharge water or otherwise regulate the liquid level in a uniform manner along the entire length of the plant trough.

Means for supplying and discharging water are connected to the main pipe, which allow the liquid level in the plant trough to be regulated by water being supplied to or discharged from the system.

A plurality of openings ensure that the trough is completely emptied. By means of the irrigation system, filling and emptying, and also in between regulating, can be provided by means of a simple construction with a small number of components.

A uniform inflow and outflow for a predetermined time ensures that each plant in the irrigation system will get the same amount of water on each occasion of irrigation. This ensures a higher plant quality and increased cultivation efficiency. With the controlled regulation of irrigation that is made possible by the system, also good conditions for improved climate control in the cultivation space are created.

A further advantage of the irrigation system according to the invention is that it allows well-functioning irrigation of very long plant troughs, even above a length of 50 m.

According to a preferred embodiment, the branch pipes have essentially the same length. This provides the same resistance and flow in all branch pipes, which additionally ensures uniform supply and discharge of water, also over long distances.

In a preferred embodiment, the supply means can be an upwardly directed duct, preferably a pipe open at one end, into which water is filled. In filling, a pressure-generating water column forms, whose water level is located at a level above the bottom of the plant trough. The pressure in the main pipe when filling is easily generated during supply of water.

In a preferred embodiment, the discharge means comprises a duct which in the closed position is directed upwards, the outlet of the discharge means being located above the bottom of the plant trough, preferably above the water level in the supply means. In the discharge position, the outlet is located below the bottom of the plant trough. The lower the outlet is located below the bottom of the plant trough the more efficient the discharge of water, i.e. emptying will be quick. The discharge duct has preferably essentially the same cross-sectional area as the main pipe, in order to offer minimum resistance when discharging water. Emptying can preferably be effected at one point in the main pipe, but can alternatively also be effected at several points in the main pipe. The discharge means makes it possible to control the irrigation time for the plants by determining when the discharge means is to be opened.

The discharge means allows easy emptying and can be given an extremely simple and reliable design without being clogged while at the same time free passage is achieved in operation. The discharge means can advantageously be designed as a flexible tubular means with a vertically adjustable outlet. Such a simple construction also minimises the risk of water leaks.

According to a preferred embodiment, the bottom of the plant trough is arranged with a slope to the openings. The slope to each opening provides complete emptying, which eliminates the problem with remaining water and the risk of development of mould and algae.

In the irrigation method according to the invention, supply of water to the plant trough is effected through a plurality of openings in its bottom by supplying water to the main pipe which is connected to the bottom. Discharge of water from the plant trough or preferably emptying of the plant trough is performed by discharging water from the main pipe.

By discharge is preferably meant complete emptying of the plant trough, but not necessarily of the main pipe, which preferably can be filled with water when using the irrigation system. By supply is meant that water is supplied to the plant trough to a liquid level suitable for the purpose. Preferably, use is made of water or water enriched with fertilisers. Said liquid level can be regulated by supply and discharge of water to and from the main pipe.

In a preferred embodiment, water is supplied in an upwardly directed duct arranged on the main pipe to form a water column. In this manner, a uniform pressure is obtained in the main pipe.

In a preferred embodiment, water is discharged from the plant trough by a discharge means in the main pipe being activated.

According to the method of manufacturing the irrigation system according to the invention, a frame system is made of girder elements and a main pipe is arranged therein. One or more elongate plant troughs are arranged on the frame, and openings in the bottom of the plant trough are then connected to the main pipe. The girder elements and the components of the main pipe can, for instance, be prefabricated for easy transport and handling. This method of manufacturing allows relatively large cultivation tables and irrigation systems to be mounted in situ in an easy way.

In manufacture, it is also preferred to arrange spacer elements on the girder elements in order to provide a slope to the openings in the bottom of the plant trough. The spacer elements can advantageously be wedge-shaped to provide a slope also in the transverse direction of the plant trough, the openings being arranged along one long side of the plant trough.

It is particularly advantageous to form a metal strip, preferably by roll-forming, to an elongate plant trough. Openings in the plant trough can be punched before or after forming. Branch pipes are connected to the openings and connected to the main pipe in the final assembly. It is advantageous that the plant trough can be made without joints by a metal strip being formed in one piece to an elongate plant trough. A further advantage is that also very long plant troughs can be made in situ at low cost and using simple means.

Additional objects and advantages of the present invention will be evident from the following description of preferred embodiments.

### Brief Description of the Drawings

A description of an irrigation system and alternative embodiments thereof according to the present invention will be described below by way of example and with reference to the accompanying drawings.
Fig. 1 is a top plan view along I-I in Fig. 2 of a greenhouse establishment with movable plant tables and with an irrigation system according to the invention.
Fig. 2 is a cross-section on a larger scale along II-II in Fig. 1 of a greenhouse with movable cultivation tables and a transporting and working zone.
Fig. 3 is a top plan view of a cultivation table with an irrigation system. For the sake of clarity, some portions are shown without plant troughs.
Fig. 4 is a cross-section along line IV-IV in Fig. 3.
Fig. 5 is a longitudinal section with an enlarged scale of height along line V-V of a plant trough in Fig. 3.
Fig. 6 is a cross-section along line VI-VI in Fig. 3 and shows in more detail a plant trough with surrounding arrangements.
Fig. 7 illustrates a portion of a plant trough and illustrates schematically how the water is conveyed to the openings of a plant trough.
Fig. 8 is a cross-section along line VII-VII and shows a drain valve in the irrigation system.
Fig. 9 is a cross-section along line VII-VII and shows an alternative embodiment of a drain valve in the irrigation system.
Fig. 10 is a flow chart of an irrigation method according to the method.

### Description of Preferred Embodiments

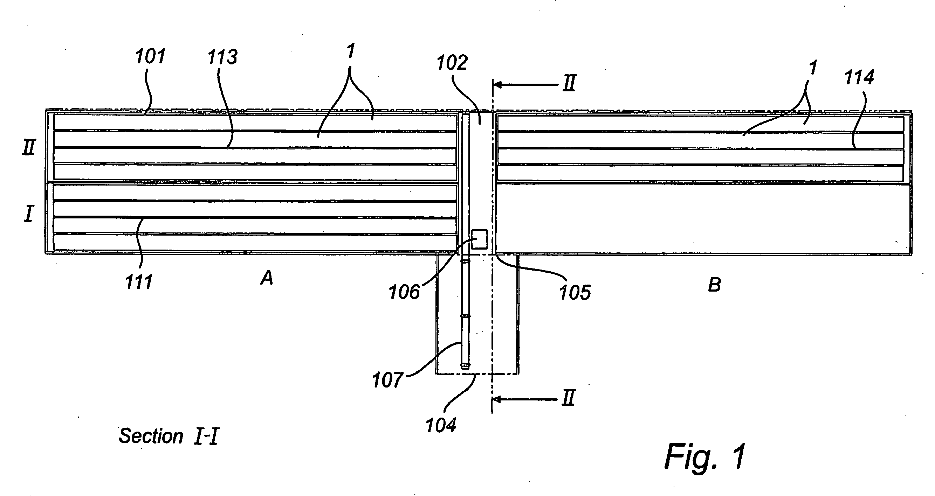

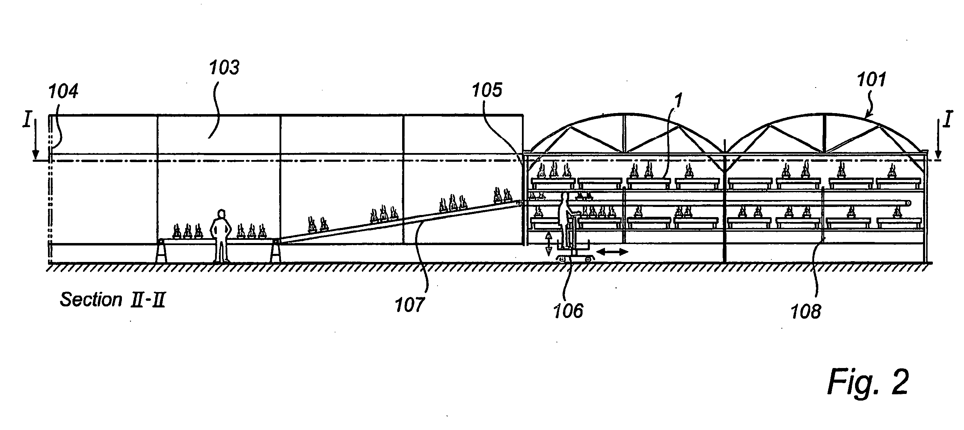

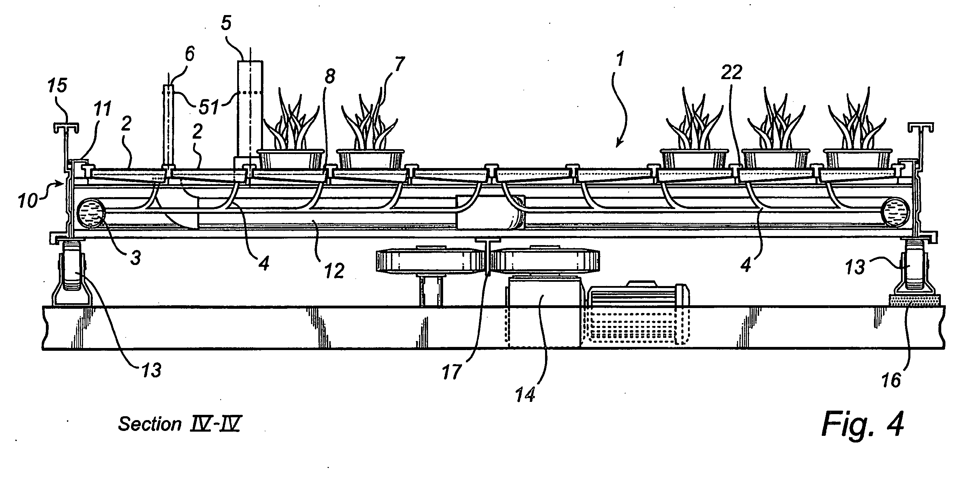

An establishment for growing plants is shown in Figs 1 and 2. The establishment consists of a greenhouse 101 with two departments A and B with an intermediate work passage 102 and elongate cultivation tables 1, which in their longitudinal direction are movable between the two departments A and B. The elongate cultivation tables are preferably 50 m long, but can be made in different lengths in the range 10-100 m. Moreover, Fig. 2 shows a transporting and working zone 103, doors 104, 105 and a work platform 106 which is vertically adjustable to allow working at cultivation tables arranged at different levels. A conveyor belt 107 is used to transport plants to and from the cultivation tables. The cultivation tables 1 are supported by rolls 13 according to Fig. 4 which are arranged on a stand 108 and can thus easily be moved between the departments A and B in the greenhouse. The rolls 13 are preferably arranged in the stand 108 at a distance of 5 m from each other.

The cultivation tables in each department A and B are arranged in two planes, so that they can be moved between the departments A and B, for instance in such a manner that all cultivation tables are positioned in one department. The greenhouse establishment according to Fig. 1 also comprises two cultivation lines I and II which each consist of two cultivation rooms 111 and 112 as well as 113 and 114. A plurality of cultivation lines can be arranged side by side. This type of greenhouse gives great advantages since it is possible to move the tables between the departments and adjust the irrigation, light and climate conditions in different ways in the different departments. Moreover, the type of greenhouse makes the tables easily accessible from the passage and offers effective utilisation of energy as well as cultivation area. The cultivation area can be made large since the cultivation tables can be arranged so closely as to entirely cover the surface in each cultivation room. One cultivation room 112, department B, in the cultivation line I can, for instance, be completely emptied of tables as shown in Fig. 1. This means, for example, that all tables in the cultivation line I are positioned in department A, i.e. cultivation room 111. Thus, this room need not be heated during the time when the plants are not to be exposed to light. Although the invention is not limited to this type of greenhouse, it has been found particularly advantageous in combination therewith.

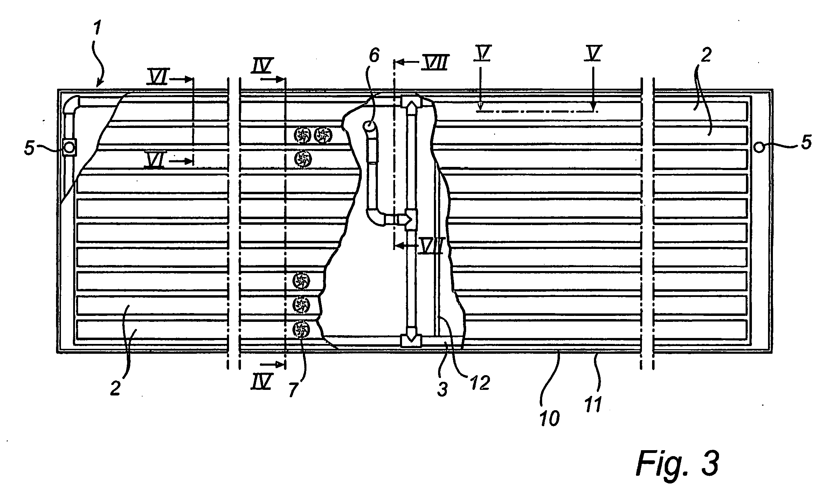

An irrigation system as shown in Figs 3 and 4 comprises cultivation tables 1 which consist of a number of plant troughs 2 with openings 22 in the bottom of the plant troughs 2. The plant troughs are elongate and a succession of pot plants 7 can be grown therein. A main pipe 3 extends in a loop round the table 1 under the plant troughs and is, by a plurality of branch pipes 4, connected to the openings 22.

The irrigation system is based on the principle of ebb and flow irrigation, in which a water level in the bottom of one or more plant troughs is raised, the level is maintained for a certain time and then the plant troughs are drained, i.e. completely emptied of water. The time during which the plants are exposed to water affects the growth and quality of the plants.

The water level in the plant trough 2 is regulated by supplying or discharging water to and from the main pipe 3 that has a greater cross-sectional area. The supply is performed by a supply means 5 and the discharge is performed by a discharge means 6. The branch pipes 4, which have a smaller cross-sectional area, convey the water through the openings 22 to or from the plant trough 2.

The frame 10 of the cultivation table is assembled of longitudinal girders 11 and transverse girders 12. Shorter reinforcement girders 15 are also arranged at certain points in the longitudinal direction of the cultivation table, which are subjected to greater loads. The cultivation table can be moved in the longitudinal direction for rational handling on rolls 13 arranged for the purpose, on which the table abuts on a plane contact surface of the frame 10. A driving device 14 is arranged for moving the table in the longitudinal direction. The driving device comprises an electric motor, which drives two rubber wheels which in turn engage a central rail 17 on the table 1. Pot plants 7 are grown on the cultivation table 1, of which only a few are shown.

Means for supplying water in the form of two filling pipes 5 are connected to the main pipe 3, one at each end of the table 1. The filling pipes 5 are arranged in such a manner that easy filling is performed without a stationary mechanical connection simply by water being filled from above into the pipes, for instance by the table for filling being placed with a filling pipe under a water tap or the like. After irrigation has been terminated, the cultivation table can be moved to the desired position. A water column and, thus, a hydrostatic pressure form when supplying or filling water into the filling pipe as the water level 51 is being raised. Atmospheric pressure prevails at the open surface of the filling pipe.

In the shown embodiment, the main pipe is made of plastic with a main diameter of 63 mm. This diameter may be varied according to application and may conveniently be in the range 40 mm to 100 mm. The branch pipes are advantageously made of non-rigid plastic with a preferred inner diameter of 8 mm, but variations between 4 and 20 mm may occur in different applications.

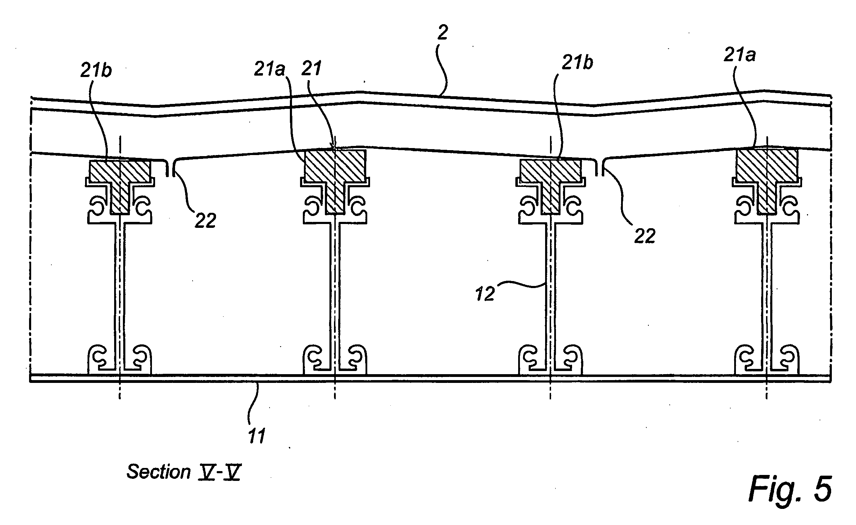

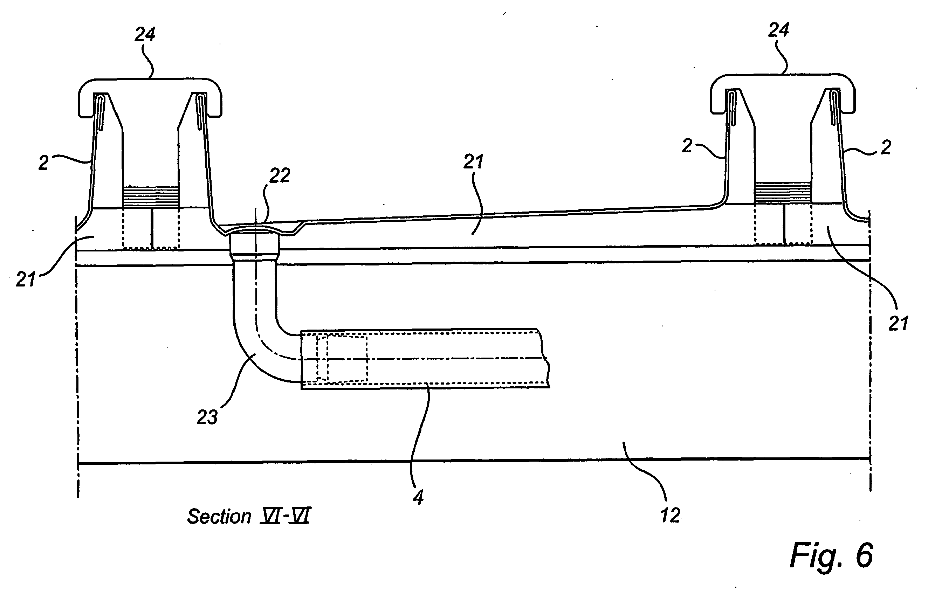

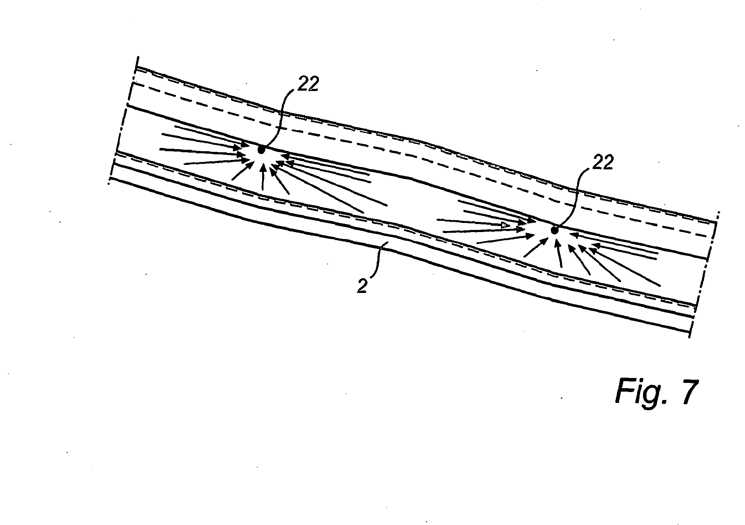

As is evident from Figs 5 and 6, the plant troughs 2 are formed with a slope, i.e. a slope to each opening 22 arranged in the plant trough 2, to ensure that the plant trough 2 is completely emptied of water after irrigation. The measures of altitude in Fig. 5 are exaggerated to illustrate the slope in the longitudinal direction. Spacer elements 21 are arranged on the transverse girders 12 of the frame with a suitable distance between the spacer elements in the longitudinal direction of the plant trough. The spacer elements can be arranged on transverse girders, for instance, by hook means. The spacer elements are of two types which have different heights 21 a and 21 b, which ensure a slope to the openings 22. Owing to the rigidity of the table, several different types of spacer elements with varying heights can be arranged in the plant troughs to compensate for any downward bending in different positions. With the suitable distance and different heights, the plant trough will be slightly sloping to the openings, which allows complete emptying but still ensures uniform irrigation of all plants in the plant trough. In order to additionally ensure emptying, the spacer elements are wedge-shaped transversely to the longitudinal direction of the plant trough, as shown in Fig. 6, while at the same time the openings 22 are arranged along one lower long side of the plant trough 2. By a longitudinal and transverse slope, it is guaranteed that the openings are always located at the lowest point. A tubular means 23, which facilitates mounting of the branch pipes 4, is arranged adjacent to the plant trough in a depression formed at the opening 22. Fig. 7 shows schematically the path of the water down to the openings.

The distance between the openings in the plant trough is 2.5 m, which results in highly effective drainage and emptying while at the same time this distance does not lead to the amount of water which is obtained by each plant, varying along the plant trough. The distance can be made shorter or longer according to application and other growing conditions, but in this application it is convenient also from the viewpoint of manufacture. A range between 1 m and 5 m gives a satisfactory result.

The slope in the longitudinal direction of the plant trough is 8 mm for each 1.25 m of the length of the plant trough, which gives a slope of 0.64%. The slope is 3 mm transversely to the width of the plant trough, which is about 130 mm, which gives a slope of 2.3%. The distance 1.25 m is determined by the length between two openings, that is to say 2.5 m. The distance in the vertical direction can be between 0 and 15 mm due to surrounding factors. A slope in the range 0.2% to 2% gives good results.

The plant trough 2 is locked to the frame by means of a locking element 24. The locking element also locks the neighbouring plant trough, which means that each locking element 24 locks two plant troughs. The locking element 24 is arranged with hook means (not shown) which engage corresponding hook means (not shown) of two neighbouring spacer elements 21.

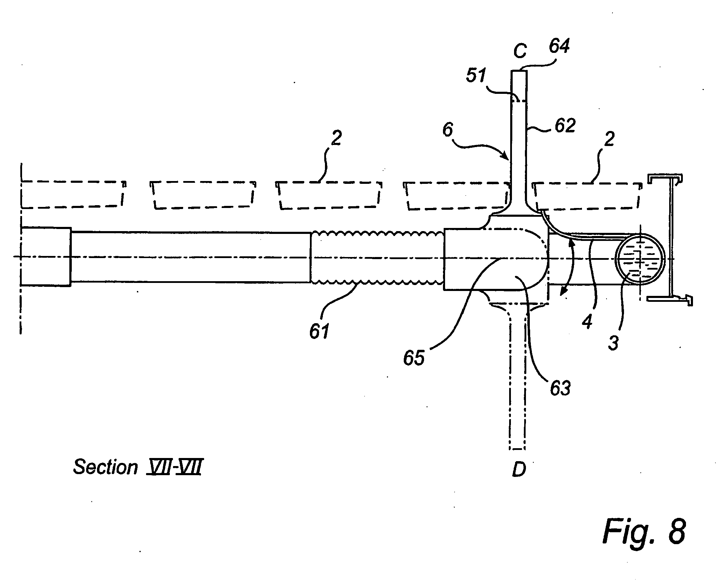

A discharge means in the form of a drain valve is shown in Fig. 8. The drain valve is a flexible tubular means 6 with a vertically adjustable outlet 64 and here comprises in particular a turnable flexible hose 61, an outlet tube 62 turnable about the axis of rotation 65 and a bent tube means 63 arranged between the hose 61 and the outlet tube 62. The outlet tube 62 has essentially the same cross-sectional area as the main pipe 3 in emptying. The outlet 64 of the outlet tube 62 is placed high up in filling, and in emptying the outlet 64 is placed at a point which is lower than the main pipe 3. The height between the outlet 64 and the main pipe 3 affects the discharge speed; the greater the difference in height the higher the discharge speed. A difference in height of 20 to 40 cm results in good discharge. The outlet tube 62 is made of a flexible material which can easily be changed in shape so as to be inserted between two plant troughs 2, in the closed position C, in the form of a flattened, collapsed tube. The outlet tube 62 is further arranged with a spring means (not shown) to provide flattening in the closed position. In the open position D, the flexible outlet tube 62 expands to achieve the maximum cross-sectional area for a high water flow through the outlet tube 62. The fact that the outlet tube 62 can be inserted between two plant troughs 2 guarantees that the pressure is maintained in the system since the water level 51 in the outlet tube is the same as the water level 51 in the filling pipe 5 according to Fig. 4. A further advantage is that the flexible hose 61 does not require much space between two plant troughs 2, i.e. it will be accommodated without further measures being taken. The flexible hose 61 gives an extremely simple and reliable construction. There is a very small risk that the flexible hose 61 is clogged in operation since its inner surfaces have no edges and other elements preventing the flow of water. The drain valve has an extremely simple and reliable design without any risk of clogging. The construction also minimises the risk of water leaks with the ensuing development of algae and mould. The components used in the drain valve are also of such a type that they are available as standard elements.

In the preferred embodiment, the discharge means 6 shown in Fig. 4 is opened by a small movement of the cultivation table 1 being made, i.e. a displacement in the longitudinal direction of the table 1, which by cooperating actuating means (not shown) between the stand and the cultivation table 1 actuates the discharge means 6 to be opened to the emptying position. The point of time when the discharge means 6 is to be opened is determined by the amount of water the plants should take up, which is dependent on the irrigation time. This solution is particularly advantageous since the driving device for moving the table 14 can be used. In combination with the cultivation table 1, the driving device 14 and a control system, control positions (not shown) are arranged to give a signal to the control system.

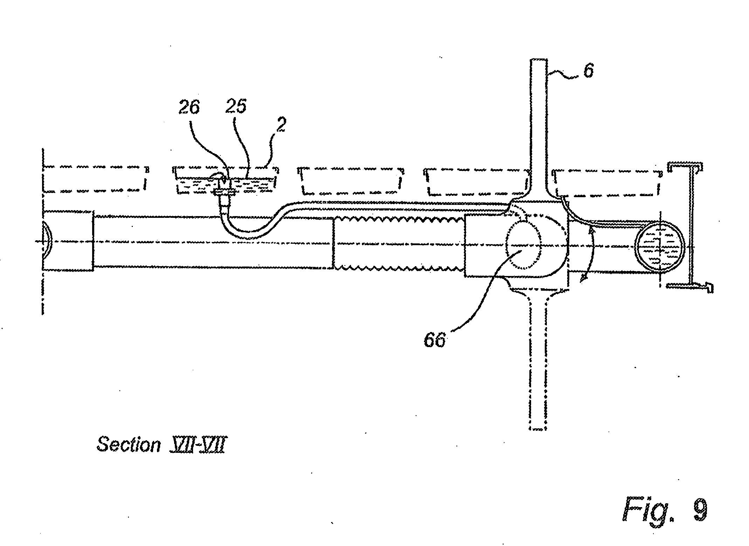

In an alternative embodiment of the discharge means 6 which is shown in Fig. 9, the water level 25 in the plant trough 2 is used to affect the opening of the discharge means 6. An overflow tube 26 is arranged in the middle of a plant trough 2. As the water level 25 reaches the overflow tube 26, a container 66 is filled with water, the weight of which increases, and when the weight is sufficient, the discharge means 6 is affected by the weight of the container.

An advantage of the irrigation system is that the cultivation tables are movable and arranged for supply of water independently of any stationary mechanical connection. This allows easy and free movement of the cultivation tables. Since no mechanical connection is required, the filling procedure will be simple, without necessitating the connection of hoses and the like.

A force sensor 16, which is shown in Fig. 4, can be arranged adjacent to at least one roll 13, which force sensor 16 can thus indicate when irrigation is due. By continuous weighing of the table, irrigation can be made at the correct point of time with the correct amount of water according to the circumstances prevailing on the occasion of irrigation. A computer-based control system makes it possible to use data from the force sensor 16 for effective cultivation of plants.

In an alternative embodiment, a force sensor (not shown) can be arranged adjacent to one or more plant troughs 2 for indicating the demand for irrigation.

In cultivation of plants, different control systems can be used to maintain the conditions that are correct for the purpose. Such control systems are preferably computer-based, and by interconnecting the irrigation system and other systems of cultivation, a total control of the cultivation is obtained, with all parameters optimised.

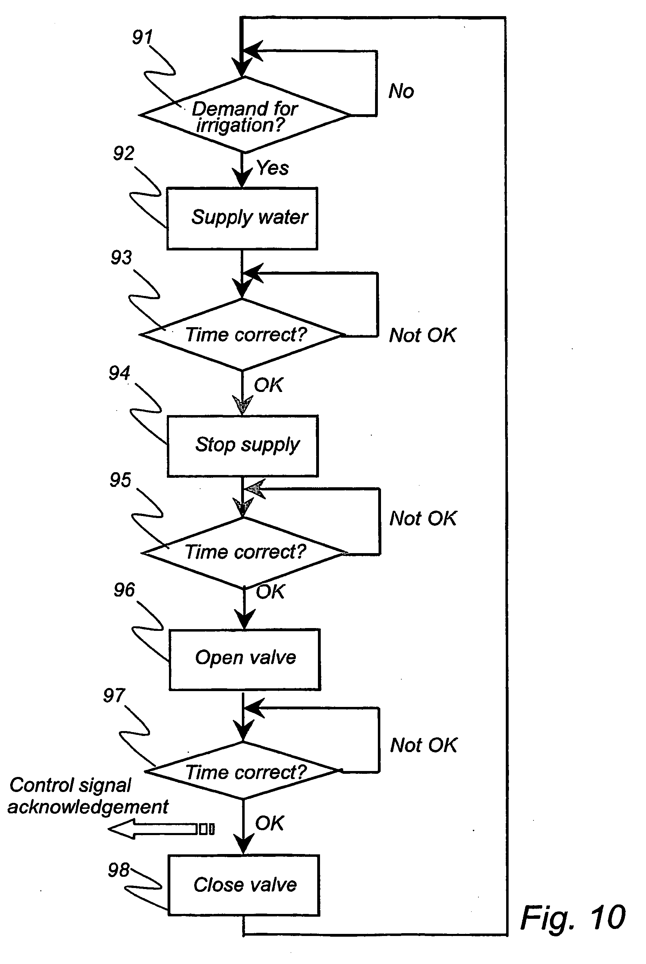

A flow chart according to Fig. 10 shows an example of how the method of irrigating can be performed according to the invention. The demand for irrigation can be determined according to step 91 by means of parameters, such as the time passed from the previous irrigation, or a signal from a force sensor 13 adjacent to the cultivation tables according to Fig. 4. When irrigation is required, water is supplied according to step 92 to the filling tubes 5 according to Fig. 3. If the time for supplying water is correct in step 93, the supply of water is stopped according to step 94. When the desired time for irrigation has been achieved in step 95, the drain valve 6 according to Fig. 3 is opened in step 96. A certain amount of time is to pass according to step 97 before closing the drain valve. In step 98, the drain valve 6 according to Fig. 3 is closed. A control signal from the cultivation table can be used to acknowledge that drainage has been performed; if this is not the case, an alarm can be sounded. The process according to the flow chart in Fig. 10 is repeated during cultivation.

The main pipe is preferably filled with water also after irrigation has been terminated, so that it will not be necessary to fill up the main pipe before the next irrigation. This means that the drainage is interrupted precisely when the plant troughs have been emptied so that there will still be water in the main pipe.

Reference is once more made to Figs 3 and 4. Extruded aluminium sections 11, 12, 15 are used when manufacturing the frame 10. These are designed in order to optimise strength and allow as simple mounting as possible of the irrigation system. By using aluminium sections, the risk of damage due to corrosion is reduced. The length of these sections is adjusted to facilitate manufacture and transport. At the mounting site, the longitudinal girders 11 are joined to obtain the desired length. The transverse girders 12 are formed with holes for fitting longitudinal girders to transverse girders by means of screws (not shown). At certain points subjected to great stress due to bending moments, a reinforcing girder 15 is mounted in order to additionally optimise the use of material. For rational mounting, holes are punched in the longitudinal girder for fitting of a transverse girder by means of screws.

The plant troughs are roll-formed from prepainted strips of steel at the mounting site. In this manner, elongate plant troughs without joints are obtained, which ensures a small risk of corrosion. Roll-forming of plant troughs can be performed in situ with equipment that can be provided by the supplier of the irrigation system. It is a comparatively quick and easy method.

The wedge-shaped spacer elements 21 can preferably be made of plastic and allow quick and simple mounting on the transverse elements. Recesses are formed in the spacer elements for arranging a locking element 24, which hooks into corresponding hooks on the spacer element. The locking element locks two juxtaposed plant troughs 2 for optimal use of the locking element 24. An appropriate number of locking elements are arranged along the length of the plant troughs 2 to lock the plant troughs 2 to the cultivation table 1.

## Claims

1. An irrigation system for plants, comprising at least one elongate plant trough (2),
a main pipe (3) with a first, greater cross-sectional area,
a plurality of openings (22) **characterised by**
a plurality of branch pipes (4) each with a second, smaller cross-sectional area, which connect the main pipe (3) to the openings (22) distributed in the longitudinal direction and positioned in the bottom of the plant trough (2), the main pipe (3) being further connected to means for supply (5) and discharge (6) of water, and a liquid level in the plant trough being regulatable by regulating the liquid pressure in the main pipe.

2. An irrigation system as claimed in claim 1, in which said branch pipes (4) have essentially the same length.

3. An irrigation system as claimed in claim 1 or 2, in which the supply means (5) comprises an upwardly directed duct which extends to a level above the bottom of the plant trough.

4. An irrigation system as claimed in any one of the preceding claims, in which a movably mounted discharge duct (62), which preferably has essentially the same cross-sectional area as the main pipe (3), is movable between a closed position (C) and a discharge position (D), in which discharge position (D) the outlet of the discharge duct (62) is located at a level below the bottom of the plant trough (2), preferably below the surrounding main pipe (3).

5. An irrigation system as claimed in any one of the preceding claims, in which the bottom of the plant trough (2) is arranged with a slope to the openings (22).

6. An irrigation system as claimed in any one of the preceding claims, in which the system is arranged in connection with a movable cultivation table (1), comprising at least one plant trough (2), the cultivation table (1) being arranged for supply of water independently of any stationary mechanical connection.

7. An irrigation system as claimed in any one of the preceding claims, in which a force sensor (16) is placed adjacent to at least one plant trough (2), said force sensor (16) being arranged to indicate when irrigation is due.

8. A method of irrigating plants in a plant trough (2) comprising the steps of,
providing supply of water to the plant trough (2) through a plurality of openings (22) in the bottom thereof by supplying water to a main pipe (3), which is connected to the openings (22) by branch pipes,
**characterised by**
providing discharge of water from the plant trough (2) by discharging water from said main pipe (3).

9. A method of irrigating plants as claimed in claim 8, comprising the step of
supplying water in an upwardly directed duct (5) connected to the main pipe (3) to form a water column.

10. A method of irrigating plants as claimed in claim 8 or 9, comprising the step of
discharging water from the plant trough (2) by activating a discharge means (6) of the main pipe (3).

11. A method of manufacturing an irrigation system, comprising the steps of
assembling longitudinal and transverse girder elements (11, 12) to form a frame (10),
arranging a main pipe (3) in the frame (10),
arranging at least one elongate plant trough (2) on the frame (10),
**characterised by**
connecting openings (22) in the bottom of the plant trough (2) to the main pipe (3) by means of branch pipes (4).

12. A method of manufacturing an irrigation system as claimed in claim 11, comprising the step of
arranging spacer elements (21) on the transverse girder elements (12) to make the plant trough (2) slope in its longitudinal direction, said spacer elements (21) preferably being wedge-shaped in order to simultaneously provide a slope transversely to the longitudinal direction of the plant trough (2).

13. A method of manufacturing an irrigation system as claimed in claim 11 or 12, comprising the steps of
forming a metal strip to at least one elongate plant trough (2),
punching openings (22) therein, and
connecting branch pipes (4) to the openings (22).

## Patentansprüche

1. Bewässerungssystem für Pflanzen, umfassend wenigstens einen lang gestreckten Pflanzenkübel (2), eine Hauptleitung (3) mit einem ersten größeren Querschnittsbereich, eine Vielzahl von Öffnungen (22),
**gekennzeichnet durch**
eine Vielzahl von Abzweigleitungen (4), jede mit einem zweiten kleineren Querschnittsbereich, wodurch die Hauptleitung (3) mit den Öffnungen (22) verbunden ist, In Längsrichtung verteilt und im Bodenbereich des Pflanzenkübels (2) angebracht, wobei die Hauptleitung (3) weiter mit Wasserversorgungsvorrichtungen (5) und Wasseraustrittsvorrichtungen (6) verbunden ist, und wobei ein Flüssigkeitsstand im Pflanzenkübel **durch** Regulierung des Wasserdrucks der Hauptleitung regulierbar ist.

2. Bewässerungssystem nach Anspruch 1, wobei die Abzweigleitungen (4) im Wesentlichen die gleiche Länge haben.

3. Bewässerungssystem nach Anspruch 1 oder 2, wobei die Versorgungsvorrichtung (5) eine aufwärts führende Leitung umfasst, die bis zu einem Stand oberhalb des Pflanzenkübelbodens reicht.

4. Bewässerungssystem nach einem der vorhergehenden Ansprüche, wobei eine bewegbar angebrachte Austrittsleitung (62), die vorzugsweise den gleichen Querschnittsbereich hat wie die Hauptleitung (3), zwischen einer geschlossenen Position (C) und einer Austrittsposition (D) beweglich ist, in welcher Austrittsposition (D) der Auslass der Austrittsleitung (62) auf einem Stand unterhalb des Pflanzenkübelbodens (2) angebracht ist, vorzugsweise unterhalb der umgebenden Hauptleitung (3).

5. Bewässerungssystem nach einem der vorhergehenden Ansprüche, wobei der Boden des Pflanzenkübels (2) mit einem Gefälle zu den Öffnungen (22) angeordnet ist.

6. Bewässerungssystem nach einem der vorhergehenden Ansprüche, wobei das System in Verbindung mit einem bewegbaren Kultivierungstisch (1) angeordnet ist, umfassend wenigstens einen Pflanzenkübel (2), und der Kultivierungstisch (1) zur Wasserversorgung unabhängig von jeder stationären mechanischen Verbindung angeordnet ist.

7. Bewässerungssystem nach einem der vorhergehenden Ansprüche, wobei ein Drucksensor (16) angrenzend an wenigstens einen Pflanzenkübel (2) angebracht ist, und dieser Drucksensor (16) so angeordnet ist, dass er die Fälligkeit der Bewässerung anzeigt.

8. Verfahren zur Bewässerung von Pflanzen in einem Pflanzenkübel (2), umfassend die Schritte
der Bereitstellung der Wasserversorgung für den Pflanzenkübel (2) mittels einer Vielzahl von Öffnungen (22) im Boden desselben, durch Zufuhr von Wasser zu einer Hauptleitung (3), die mit den Öffnungen (22) durch Abzweigleitungen verbunden ist, **gekennzeichnet durch**
die Bereitstellung von Wasseraustritt aus dem Pflanzenkübel (2) durch Ableiten des Wassers von der Hauptleitung (3).

9. Verfahren zur Bewässerung von Pflanzen nach Anspruch 8, umfassend den Schritt
der Wasserversorgung in einer aufwärts führenden Leitung (5), die an die Hauptleitung (3) angeschlossen ist, um eine Wassersäule zu bilden,

10. Verfahren zur Bewässerung von Pflanzen nach Anspruch 8 oder 9, umfassend den Schritt des Wasseraustritts aus dem Pflanzenkübel (2) mittels Aktivierung einer Austrittsvorrichtung (6) der Hauptleitung (3).

11. Verfahren zur Herstellung eines Bewässerungssystems, umfassend die Schritte
des Zusammenbaus längs und quer verlaufender Trägerelemente (11, 12) zur Bildung eines Rahmens (10),
der Anordnung der Hauptleitung (3) in dem Rahmen (10),
der Anordnung wenigstens eines lang gestreckten Pflanzenkübels (2) auf dem Rahmen (10), **dadurch gekennzeichnet, dass** die Öffnungen (22) im Boden des Pflanzkübels (2) mit der Hauptleitung (3) mittels Abzweigleitungen (4) verbunden sind.

12. Verfahren zur Herstellung eines Bewässerungssystems nach Anspruch 11, umfassend den Schritt
der Anordnung von Abstandselementen (21) auf den Querträgerelementen (12), um ein Gefälle des Pflanzenkübels (2) in Längsrichtung zu bewirken, wobei diese Abstandselemente (21) vorzugsweise keilförmig sein sollten, um gleichzeitig ein Gefälle quer zu der Längsrichtung des Pflanzenkübels (2) zu bewirken.

13. Verfahren zur Herstellung eines Bewässerungssystems nach Anspruch 11 oder 12, umfassend die Schritte
des Anpassens eines Metallstreifens an wenigstens einem lang gestreckten Pflanzenkübel (2),
des Stanzens von Öffnungen darin und
der Verbindung der Abzweigleitungen (4) mit den Öffnungen (22).

## Revendications

1. Système d'irrigation pour des plantes, comprenant au moins un bac a plantes allongé (2),
un tuyau principal (3) avec une première aire en section transversale plus grande,
une pluralité d'ouvertures (22)
**caractérisé par**
une pluralité de tuyaux secondaires (4) chacun avec une seconde aire en section transversale plus petite, qui connectent le tuyau principal (3) aux ouvertures (22) distribuées dans la direction longitudinale et positionnées dans le fond du bac à plantes (2), le tuyau principal (3) étant en outre connecté à des moyens d'alimentation (5) et d'évacuation (6) d'eau, et un niveau de liquide dans le bac à plantes étant réglable en réglant la pression de liquide dans le tuyau principal.

2. Système d'irrigation selon la revendication 1, dans lequel lesdits tuyaux secondaires (4) ont sensiblement la même longueur.

3. Système d'irrigation selon la revendication 1 ou 2, dans lequel les moyens d'alimentation (5) comprennent un conduit dirigé vers le haut qui s'étend à un niveau au-dessus du fond du bac à plantes,

4. Système d'irrigation selon l'une quelconque des revendications précédentes, dans lequel un conduit d'évacuation (62) monté de manière mobile, qui a de préférence sensiblement la même aire en section transversale que le tuyau principal (3), est mobile entre une position fermée (C) et une position d'évacuation (D), dans laquelle position d'évacuation (D) la sortie du conduit d'évacuation (62) est située à un niveau au-dessous du fond du bac à plantes (2), de préférence sous le tuyau principal (3) qui l'entoure.

5. Système d'irrigation selon l'une quelconque des revendications précédentes, dans lequel le fond du bac à plantes (2) est agencé avec une pente vers les ouvertures (22).

6. Système d'irrigation selon l'une quelconque des revendications précédentes, dans lequel le système est agencé en liaison avec une table de culture (1) mobile, comprenant au moins un bac a plantes (2), la table de culture (1) étant agencée pour alimenter de l'eau indépendamment de toute connexion mécanique fixe.

7. Système d'irrigation selon l'une quelconque des revendications précédentes, dans lequel un capteur de force (16) est placé au voisinage d'au moins un bac a plantes (2), ledit capteur de force (16) étant agencé pour indiquer quand l'irrigation est souhaitable.

8. Procédé d'irrigation de plantes dans un bac a plantes (2) comprenant les étapes consistant à
fournir l'alimentation en eau du bac à plantes (2) à travers une pluralité d' ouvertures (22) dans le fond de celui-ci en alimentant de l'eau vers un tuyau principal (3), qui est connecté aux ouvertures (22) par des tuyaux secondaires, **caractérisé par** le fait de
fournir l'évacuation de l'eau depuis le bac à plantes (2) en évacuant de l'eau depuis le tuyau principal (3).

9. Procédé d'irrigation de plantes selon la revendication 8, comprenant l'étape consistant à
alimenter de l'eau dans un conduit dirigé vers le haut (5) connecté au tuyau principal (3) pour former une colonne d'eau.

10. Procédé d'irrigation de plantes selon la revendication 8 ou 9, comprenant l'étape consistant à
évacuer l'eau depuis le bac à plantes (2) en activant des moyens d'évacuation (6) du tuyau principal (3).

11. Procédé de fabrication d'un système d'irrigation, comprenant les étapes consistant à
assembler des éléments de panne longitudinaux et transversaux (11,12) pour former un châssis (10),
agencer un tuyau principal (3) dans le châssis (10),
agencer au moins un bac a plantes (2) allongé sur le châssis (10),
**caractérisé par**
connecter des ouvertures (22) dans le fond du bac à plantes (2) vers le tuyau principal (3) au moyen de tuyaux secondaires (4).

12. Procédé de fabrication d'un système d'irrigation selon la revendication 11, comprenant l'étape consistant à
agencer des éléments d'entretoise (21) sur les éléments de panne transversaux (12) pour rendre le bac à plantes (2) incliné dans sa direction longitudinale, lesdits éléments d'entretoise (21) étant de préférence en forme de coin afin de fournir simultanément une pente transversalement vers la direction longitudinale du bac à plantes (2).

13. Procédé de fabrication d'un système d'irrigation selon la revendication 11 ou 12, comprenant les étapes consistant à
former une bande métallique en au moins un bac a plantes (2) allongé,
poinçonner des ouvertures (22) dedans, et
connecter des tuyaux secondaires (4) aux ouvertures (22).
